# EUROPEAN PATENT APPLICATION

(11) **EP 1 326 407 A2**
(43) Date of publication of application: **09.07.2003**
(21) Application number: 02102891.5
(22) Date of filing: 24.12.2002
(51) Int. Cl.: H04L 29/12, H04L 29/06, H04M 7/00

(54) **Automatic registration method of an IP telephony end-point**

(30) Priority: 03.01.2002 US 40127
(71) Applicant: AT&T Corp., New York, NY 10013-2412 (US)
(72) Inventor: SEGELSTEIN, David, J, 07747, Aberdeen, Monmouth County (US)
(74) Representative: Suckling, Andrew Michael

(57) **Abstract**

An automatic registration procedure for IP telephony end-points is presented. A first-stage registration is performed which provides enough service capability to allow the customer or installer to use the end-point to create an account and to subscribe to the specific services and features desired by the customer. Then a second-stage registration is performed which provides the end-point with the full set of features subscribed to by the customer.

## Description

### FIELD OF THE INVENTION

The present invention relates generally to registration of network devices and more particularly to a two-stage auto-registration of an IP telephony end-point.

### BACKGROUND OF THE INVENTION

Internet Protocol (IP) telephony is a technology that allows people to use the Internet as the transmission medium for placing telephone calls. These calls may be placed by devices such as IP phones or by a personal computer having the appropriate hardware and software to connect to a network such as the Internet. This equipment is commonly referred to as an end-point. The end-point must be registered so that it is known on the network and is able to send and receive communications with other devices registered on the network. Each device on the network is typically given a unique identifier such as a Media Access Control (MAC) address. A MAC address is a hardware address that uniquely identifies a device or node on a network. Preferably, the device is registered automatically on power-up if the end-point is connected to the network.

One known method of performing auto-registration of end-point telephony equipment has been to pre-assign specific equipment to a specific customer. This allowed the pre-provisioning of network systems and servers with the customer's service features keyed by the end-point equipment ID such as the MAC address of the end-point equipment. When the installer turns on the equipment, the auto-registration process then can gain access to the appropriate resources to retrieve a configuration file that supports the capabilities necessary for the subscribed features.

One problem associated with the above-described method is that the pre-provisioning process must reliably identify the specific piece of end-point equipment that is to be installed in a customer's premises. This can be problematic in part because the identity of the equipment that will be delivered may not be known or available at the required time. In addition, even if specifically identified equipment is delivered to the customer's premises, the method would fail if the equipment malfunctions and must be replaced by similar equipment with a different identifier (MAC address). For example, if the original Voice Over IP (VoIP) phone doesn't perform properly once installed, the phone is replaced with a similar VoIP phone having its own unique MAC address. The MAC address of the new phone is of course different from the MAC address of the original VOIP phone.

A second known method of providing auto-registration of end-point telephony equipment involves the customer (or third party installer) using a second telephone line, a cellular connection, or other alternative link to contact the service provider. The customer would establish an account, subscribe to specific service features, and then would need to provide the ID (MAC address) of the end-point equipment. The service-provider representative would then manually enter this information into the servers and systems that would be used during the auto-registration process. There are two difficulties with this procedure. First, the customer (or third party installer) must have an alternative means to contact the service-provider representative (because the telephony and data resources to be enabled at the customer's premises are not yet available). Second, the customer (or third party installer) must recite or enter the equipment ID, which may be a complex series of characters such as the MAC address. This is likely to lead to errors.

It would, therefore, be desirable to provide an automatic registration procedure for IP telephony end-points which is inexpensive to implement, simple to perform, and is not prone to error.

### SUMMARY OF THE INVENTION

A two-stage automatic registration procedure for IP telephony end-points is presented. A first-stage registration is performed which provides a default configuration to the end-point. The default configuration provides enough limited service capability to the end-point to allow the customer to create an account and to subscribe to the specific services and features desired by the customer. After the first-stage registration has been performed, a second-stage registration is performed which provides the full set of features subscribed to by the customer.

### BRIEF DESCRIPTION OF THE DRAWINGS

The invention will be more fully understood from the following detailed description taken in conjunction with the accompanying drawings, in which:

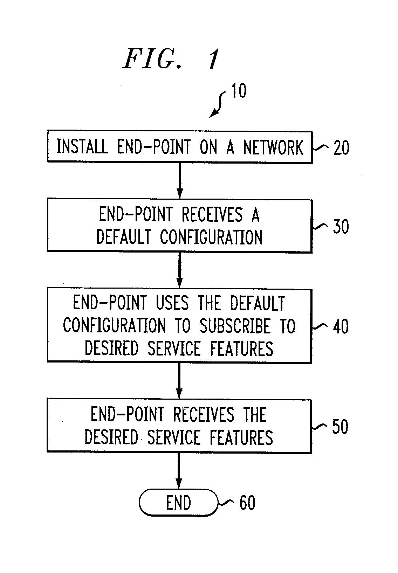

Fig. 1 is a flow chart of the two-stage auto-registration method of the present invention.

### DETAILED DESCRIPTION OF THE INVENTION

An IP telephony service provider would like to allow a customer to subscribe to telephony service with equipment either installed by a third party or purchased and installed by the customer. In these cases, the identity of the end-point equipment may not be known by the service provider prior to installation. Additionally, the customer's account may not be established at that time either. However, early in the service subscription process, the service provider cannot reliably know the identity (i.e., MAC address) of the specific piece of equipment that will eventually be installed at a given customer's location. In order to support service-specific features to an authorized and appropriate end-point, both the customer and the end-point equipment must be uniquely identified and known to the service provider. The identity of the end-point equipment (such as the MAC address of the end-point) is made known to network systems during an auto-registration process that occurs when the equipment is powered on, and the capabilities of the end-point are enabled by the content of a configuration file that is downloaded during that process. However, fully capable service features cannot be supported unless there is an account and the equipment is associated with that account. Without the existence of an account, and without the linking of an account with the equipment identity, network systems cannot know which configuration file to download to which end-point during the auto-registration procedure.

IP telephony service may be available either by using equipment installed by third party providers or by using home computer (software) versions of an IP telephony end-point. The latter is typically installed and turned on by the customer. In both cases, neither the identity of the end-point equipment nor the customer's identity and service subscription (if any) may be known prior to the installation and turn on. This is the "retail model" of IP telephony service. In such a case, the first stage of the presently disclosed method uses a registration process to make available to the end-point (regardless of whether or not there is an associated customer account) basic communication capabilities. These basic capabilities can then be used by the customer (or third-party installer) to create an account, establish service features, and associate the specific end-point equipment with the account. After the first stage of the process is performed, a second stage of the process is performed. The second stage of the auto-registration process then allows the downloading of a customer- and service-specific configuration file that can support the new customer's service features.

The presently disclosed method utilizes a two-stage auto-registration process. Referring to Figure 1, a flow chart of the method 10 is shown. The first step 20 of the process installs an end-point on a network. This may be a piece of equipment purchased or leased from a third party which is also installed by the third party, or may alternately be a computer program installed on a home computer by the customer. After the installation of the IP-telephony end-point, powering on that end-point equipment triggers a first stage of the auto-registration process. This first stage informs network systems of the equipment identity, and enables basic communication capabilities. As shown in the next step, step 30, during the first stage, a default configuration file is made available to the end-point. In one embodiment, the configuration file enables a restricted set of capabilities which are sufficient to allow the customer to call a special destination. This is shown in step 40. This destination would either be a staffed service center, or an automated voice-recognition server. The customer could then establish an account, and subscribe to specific service features. During this service-establishment process, the service representative establishing the account, or the network server using voice-recognition capabilities, can query the end-point (e.g., using an SNMP "get" message) for its identity (MAC address). The identity of the equipment is then linked to the service features and the customer account, and that association would be established in the network systems involved in the auto-registration process.

Alternately, the default configuration provides to the end-point a set of capabilities which is just sufficient to allow the installer to use the data communications capabilities of the end-point to enter a key that identifies the specific customer's service features. This key is then used by the systems that support auto-registration to retrieve or construct a configuration file that supports that customer's specific service features, and to link it to the MAC address of the end-point equipment (which is identified automatically during the auto-registration process).

After completion of the above-described first stage, a second stage of the process is initiated, such as by rebooting the customer's equipment. As shown in step 50, the proper configuration file is selected (or constructed) based on the now-known MAC address of the end-point which was identified during the first stage of the auto-registration process and the now-known customer identity. The configuration file will enable the full range of service to which the customer has subscribed. The process is then finished, as shown in step 60.

One advantage of the proposed two-stage auto-registration procedure is that the installer uses capabilities that are being installed in the customer premises equipment during the initial steps of the process and need not have an alternative means of communication with a network representative. Another advantage of the presently described two stage auto-registration process is that the installer need only enter a simple key that identifies the customer (this could be a customer ID number, an account number, the customer's address, etc.). The installer is not required to recite or enter a complex identifier for the end-point equipment since the MAC address of the end-point is revealed to the network systems during the first stage of the auto-registration process.

Having described preferred embodiments of the invention, it will now become apparent to those of ordinary skill in the art that other embodiments incorporating these concepts may be used. Additionally, the software included as part of the invention may be embodied in a computer program product that includes a computer-usable medium. For example, such a computer-usable medium can include a readable memory device, such as a hard drive device, a CD-ROM, a DVD-ROM, or a computer diskette, having computer-readable program code segments stored thereon. The computer-readable medium can also include a communications link, either optical, wired, or wireless, having program code segments carried thereon as digital or analog signals. Accordingly, it is submitted that the invention should not be limited to the described embodiments but rather should be limited only by the spirit and scope of the appended claims.

## Claims

1. A method for registering of an IP telephony end-point, comprising the steps of:
installing an end-point on an IP telephony network;
receiving, by said end-point, a default configuration;
subscribing to desired service features by said end-point using said default configuration; and
receiving, by said end-point, a configuration which supports said desired service features.

2. The method of claim 1 wherein said step of installing further comprises revealing a MAC address of the end-point to other devices on said IP telephony network.

3. The method of claim 1 wherein said step of using said default configuration further comprises the step of entering an identification of a customer.

4. The method of claim 3 wherein said identification of said customer is selected from the group consisting of a key, a customer identification number, an account number and a customer address.

5. The method of claim 1 wherein prior to said step of receiving a default configuration, the identification of said end-point is unknown.

6. The method of claim 1 wherein said default configuration allows a customer to use said end-point to communicate with a predetermined destination.

7. The method of claim 6 wherein said predetermined destination is a service center.

8. The method of claim 6 wherein said predetermined destination is a server.

9. The method of claim 1 wherein said step of installing is performed by an entity selected from the group consisting of a customer and a third-party installer.

10. A method for performing automatic registration of an IP telephony end-point comprising the steps of :
performing a first-stage registration, wherein said first stage-registration provides service capable of allowing a customer to subscribe to a desired service; and
performing a second-stage registration wherein said end-point is provided with the desired service.

11. The method of claim 10 wherein said step of performing a first-stage registration includes the step of installing said end-point on an IP telephony network.

12. The method of claim 10 wherein said step of performing a first-stage registration includes the step of receiving a default configuration.

13. The method of claim 12 wherein said step of performing a first-stage registration includes the step of using said default configuration to subscribe to the desired service.

14. The method of claim 11 wherein said step of performing a first-stage registration includes the step of revealing a MAC address to other devices on said network.

15. The method of claim 12 wherein said step of performing a first-stage registration includes the step of entering an identification of a customer.

16. The method of claim 15 wherein said step of entering an identification number of a customer enters an identification number selected from the group consisting of a key, a customer identification number, an account number and a customer address.

17. The method of claim 12 wherein prior to said step of receiving a default configuration, the identification of said end-point is unknown.

18. The method of claim 12 wherein said step of performing a first-stage registration includes the step of using said default configuration to communicate with a predetermined destination.

19. The method of claim 18 wherein said predetermined destination comprises a service center.

20. The method of claim 18 wherein said predetermined destination comprises a server.

21. The method of claim 11 wherein said step of installing is performed by an entity selected from the group consisting of a customer and a third-party installer.

22. The method of claim 10 wherein said step of performing a second-stage registration includes the step of receiving a configuration which supports said desired service.
